# FASCICULE DE BREVET EUROPEEN

(11) **EP 4 077 069 B1**
(45) Date de publication et mention de la délivrance du brevet: **20.11.2024**
(21) Numéro de dépôt: 20830211.7
(22) Date de dépôt: 18.12.2020
(51) Int. Cl.: B60S 1/48, B60S 1/52, B60S 1/54

(54) **DISPOSITIF DE PROJECTION D'UN SYSTÈME D'ESSUYAGE**
SPRÜHVORRICHTUNG FÜR WISCHERANLAGE
WIPER SYSTEM SPRAYING DEVICE

(30) Priorité: 18.12.2019 FR 1914734
(43) Date de publication de la demande: 26.10.2022
(73) Titulaire: Valeo Systèmes d'Essuyage, 78322 Le Mesnil Saint Denis (FR)
(72) Inventeur: JARASSON, Jean-Michel, 78322 LE MESNIL SAINT DNEIS (FR); PERET, Adrien, 78322 LE MESNIL SAINT DENIS (FR)
(74) Mandataire: Valeo Visibility
(86) Numéro de dépôt international: PCT/EP2020/087170
(87) Numéro de publication internationale: WO 2021/123270

(56) Documents cités:
- EP-A1- 3 800 094
- WO-A1-2020/053183
- DE-A1- 10 016 221
- DE-A1- 102015 120 144
- FR-A1- 2 960 797
- KR-A- 20150 130 190
- US-A1- 2013 152 321

## Description

La présente invention a trait au domaine des dispositifs de nettoyage pour surface vitrée, notamment pour un pare-brise ou une lunette arrière, de véhicule. Plus particulièrement, la présente invention concerne les systèmes de projection de liquide sur une surface vitrée de véhicule en coopération avec les systèmes d'essuyage.

Afin de faciliter le nettoyage des surfaces vitrées par l'intermédiaire d'un ou plusieurs balais d'essuyage, il est prévu de projeter un fluide nettoyant, notamment un liquide lave-glace, sur la surface vitrée lorsque celle-ci n'est pas rendue humide par de l'eau de pluie. De nos jours, il est standard de projeter le fluide nettoyant via des dispositifs de projection fixes agencées au voisinage de la surface à nettoyer, classiquement sur une partie inférieure de la surface vitrée, notamment du pare-brise et/ou de la lunette arrière du véhicule.

Π est également connu de positionner ces dispositifs de projection sur les balais d'essuyage pour projeter le fluide nettoyant directement au niveau des zones de la surface vitrée à nettoyer. En étant distribué sur des zones de la surface vitrée à nettoyer en contact avec le ou les balais d'essuyage le fluide nettoyant est ainsi mieux réparti sur les zones de la surface vitrée à nettoyer. De plus, la quantité de fluide nettoyant est diminuée comparée à la quantité utilisée par des dispositifs de projection ménagés sur la partie inférieure de la surface vitrée, notamment du pare-brise et/ou de la lunette arrière du véhicule.

Pour optimiser la quantité de fluide nettoyant projetée par ces dispositifs de projection montés sur les balais d'essuyage, une adjonction d'air est réalisée dans l'environnement de la pompe du système de distribution de fluide nettoyant. Par l'ajout d'air dans le fluide nettoyant au niveau de la pompe, une mousse est projetée sur la surface vitrée assurant le nettoyage de la surface vitrée répartissant efficacement le fluide nettoyant sur la surface vitrée à nettoyer et diminuant encore la quantité de fluide nettoyant utilisée pour nettoyer la surface vitrée du véhicule. Cependant, l'écoulement du fluide dans le montage provoque des dépressions au sein de celui-ci. Lorsque ces dépressions deviennent importantes, elles donnent naissance au phénomène de cavitation qui peut alors perturber le fonctionnement de la pompe, voire provoquer son dysfonctionnement, et impacter la longévité de la pompe.

Les documents FR2960787 et DE10016221 décrivent quelques exemples de réalisation de systèmes de nettoyage de surface vitrée de véhicule. Les documents WO 2020/053183 A1 et EP 3 800 094 A1 sont cités en vertu de l'art. 54(3) CBE.

La présente invention s'inscrit dans ce contexte en proposant un dispositif de projection dans lequel l'adjonction d'air dans le fluide nettoyant est réalisée au niveau du dispositif de projection, et non plus au niveau de l'environnement de la pompe du système de distribution de fluide nettoyant.

Plus particulièrement, la présente invention propose un système de nettoyage d'une surface vitrée d'un véhicule. Le système de nettoyage comprend un dispositif de projection de fluide nettoyant sur la surface vitrée et un réseau de distribution destiné à fournir le fluide nettoyant au dispositif de projection, le dispositif de projection ou le réseau de distribution comprenant un élément mélangeur avec au moins une entrée de fluide nettoyant, une entrée d'air et une sortie de projection, l'élément mélangeur comprenant au moins un conduit destiné à être parcouru par le fluide nettoyant et en communication avec l'entrée de fluide nettoyant et la sortie de projection, l'élément mélangeur comprenant un canal destiné à être parcouru par de l'air en communication avec l'entrée d'air et le conduit, dans lequel le dispositif de projection est une rampe de projection, la rampe de projection étant configurée pour être montée sur ou dans un balai d'essuyage, la rampe de projection s'étendant le long du balai d'essuyage et dans lequel l'élément mélangeur comprend un élément monobloc qui délimite le conduit destiné à être parcouru par le fluide nettoyant et le canal destiné à être parcouru par de l'air.

Le dispositif de projection a ainsi pour rôle de projeter le fluide nettoyant sur la surface vitrée du véhicule. Le passage du fluide nettoyant dans le conduit provoque une dépression proche de l'une des extrémités du canal aspirant l'air au travers de ce dernier. L'air aspiré s'intègre dans le fluide nettoyant en formant un colloïde d'air et de fluide nettoyant, c'est-à-dire une mousse. Le dispositif de projection projette donc le fluide nettoyant mélangé à de l'air, prenant la forme d'une mousse, sur la surface vitrée.

Π faut entendre ici, ainsi que dans tout ce qui suit, par « colloïde » une suspension d'une ou plusieurs substances, dispersées régulièrement dans une autre substance, formant un système à deux phases séparées. Un colloïde peut se présenter par exemple sous la forme d'une mousse.

Selon un mode de réalisation, le dispositif de projection peut être ménagé sur un balai d'essuyage du véhicule, sur le bras d'un système d'essuyage du véhicule voire sur le capot du véhicule au plus proche du véhicule.

Selon un mode de réalisation, le dispositif de projection peut comprendre un élément de guidage destiné à diriger le fluide nettoyant vers la sortie de projection et/ou vers un autre dispositif de projection et/ou le réseau de distribution.

On comprend que le dispositif de projection comprend au moins une entrée de fluide nettoyant, une entrée d'air, une sortie de projection, un conduit et un canal et qu'avantageusement le dispositif de projection peut comprendre sans limitation quantitative une pluralité d'entrées de liquide, d'entrées d'air, de sorties de mousse, de conduits et de canaux.

Selon un mode de réalisation, le système de nettoyage comprend une pompe propulsant le fluide nettoyant dans le réseau de distribution, la pompe étant l'organe moteur à l'origine d'une circulation du fluide nettoyant dans l'ensemble du système de nettoyage. La pompe projette du fluide nettoyant à travers le réseau de distribution, le réseau de distribution comprenant au moins un tuyau reliant la pompe au dispositif de projection.

Selon un mode de réalisation, le système de nettoyage est configuré pour coopérer avec un système d'essuyage du véhicule pour assurer un nettoyage optimal de la surface vitrée du véhicule.

Selon un mode de réalisation, le conduit destiné à être parcouru par le fluide nettoyant présente une restriction de section dans laquelle débouche le canal destiné à être parcouru par de l'air.

Selon un mode de réalisation, le conduit est délimité par une section interne du dispositif de projection, au moins une dimension de la section interne variant le long du conduit. La restriction de section est ainsi disposée entre l'entrée de fluide nettoyant et la sortie de projection. La restriction de section du conduit au niveau de la zone où débouche le canal entraîne une augmentation de la vitesse de circulation du fluide nettoyant et accentue la dépression au niveau de cette zone, ladite zone devenant une zone d'expansion de l'air dans le fluide nettoyant. Une meilleure dépression induit une aspiration de l'air ainsi qu'un colloïde optimisé, par exemple une mousse optimisée.

Selon un mode de réalisation, le conduit destiné à être parcouru par le fluide nettoyant s'étend perpendiculairement au canal destiné à être parcouru par de l'air.

Selon un mode de réalisation, le canal destiné à être parcouru par de l'air présente en tout point une section inférieure à une section du conduit destiné à être parcouru par le fluide nettoyant.

Une section inférieure du canal comparé à n'importe quelle section du conduit diminue le risque que du fluide nettoyant circule dans le canal destiné à être parcouru par de l'air.

On comprend que le conduit destiné à être parcouru par le fluide nettoyant, le canal destiné à être parcouru par de l'air et la sortie de projection sont solidaires les uns des autres, c'est-à-dire que ces éléments sont non séparables sans entraîner la destruction des autres éléments de l'élément mélangeur.

Selon un mode de réalisation, le conduit destiné à être parcouru par le fluide nettoyant est ménagé dans un corps monobloc de l'élément mélangeur et dans lequel le canal destiné à être parcouru par de l'air est délimité par une portion du corps monobloc s'étendant dans ledit conduit.

Selon un mode de réalisation, le corps monobloc comprend une extension ménagée dans le conduit destiné à être parcouru par le liquide lave glace, cette extension comprenant le canal destiné à être parcouru par de l'air.

Selon un mode de réalisation, un diamètre externe de la portion du corps monobloc délimitant le canal destiné à être parcouru par de l'air est plus petit qu'un diamètre interne du conduit destiné à être parcouru par le fluide nettoyant.

Pour que le fluide nettoyant circule jusqu'à la sortie de projection du dispositif de projection, le plus grand diamètre de la portion du corps monobloc doit être plus petit que le plus petit diamètre du conduit. Selon un mode de réalisation, lorsque le fluide nettoyant circule dans le conduit, il circule de façon annulaire autour de la portion de corps formant l'extension. Selon un mode de réalisation, la portion du corps monobloc délimitant le canal destiné à être parcouru par de l'air et le conduit destiné à être parcouru par le fluide nettoyant s'étendent le long d'une même direction.

Selon un mode de réalisation, la portion du corps monobloc s'étend le long d'une direction confondue à la direction d'extension du conduit. De cette façon, la portion du corps monobloc s'étend au centre du conduit. Cependant, une portion du corps monobloc s'étendant dans une direction parallèle, comme par exemple en périphérie du conduit, ne sort pas du cadre de l'invention.

Selon un mode de réalisation, la rampe de projection est positionnée sur ou dans un élément du balai d'essuyage, formant soit un élément additionnel du balai d'essuyage soit un élément intégré à l'un des éléments du balai d'essuyage, tel que dans un déflecteur par exemple. Selon un mode de réalisation, la rampe de projection comprend l'élément mélangeur, elle peut aussi comprendre avantageusement une pluralité dudit élément mélangeur favorisant la projection du colloïde d'air et de fluide nettoyant le long du balai d'essuyage.

Selon un mode de réalisation, la rampe de projection comprend le conduit destiné à être parcouru par le fluide nettoyant, au moins deux sorties de mousse chacune reliée au conduit par une buse, et au moins le canal destiné à être parcouru par de l'air ménagé dans chacune des buses.

Selon un mode de réalisation, la rampe de projection comprend un conduit destiné à être parcouru par un fluide nettoyant alimentant une pluralité de buses disposées le long de la rampe de projection. Chacune des buses comprend un canal et une sortie de projection, le colloïde d'air et de fluide nettoyant se réalisant dans chacune des buses.

L'invention concerne également un système d'essuyage comprenant au moins un dispositif d'essuyage et un système de nettoyage d'une surface vitrée d'un véhicule tel que défini ci-avant.

Selon un mode de réalisation, le dispositif d'essuyage comprend un balai d'essuyage.

Selon un autre mode de réalisation, le dispositif d'essuyage comprend en outre un bras d'essuyage.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, parmi lesquels :
[Fig. 1] est une représentation d'un véhicule équipé d'un système de nettoyage selon l'invention.
[Fig. 2] est une représentation en perspective d'une rampe de projection présentant au moins un dispositif de projection selon l'invention.
[Fig. 3] est une coupe transversale de la rampe de projection selon la figure 2.
[Fig. 4] est une représentation en perspective d'un dispositif de projection selon l'invention intégré dans un réseau de distribution.
[Fig. 5] est une coupe longitudinale du dispositif de projection selon la figure 4.
[Fig. 6] est une représentation en perspective d'un dispositif de projection dans lequel une portion du corps s'étend dans le conduit destiné à être parcouru par le fluide nettoyant.
[Fig. 7] est une coupe longitudinale d'un dispositif de projection selon la figure 6.
[Fig. 8] est une représentation en perspective d'un dispositif de projection présentant deux buses de projection, un élément de guidage et un organe de fixation à un bras d'un système d'essuyage.
[Fig. 9] est une coupe transversale du dispositif de projection selon la figure 8.
[Fig. 10] est une représentation en perspective d'un dispositif de projection présentant deux buses de projection dans lesquelles une portion du corps s'étend dans un conduit destiné à être parcouru par le fluide nettoyant, un élément de guidage et un organe de fixation à un bras d'un système d'essuyage.
[Fig. 11] est une coupe transversale du dispositif de projection selon la figure 10.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Par ailleurs, le fluide nettoyant décrit dans la suite de la description qui suit est avantageusement un liquide lave-glace, comme un mélange d'eau, d'alcool et d'éthylène glycol par exemple.

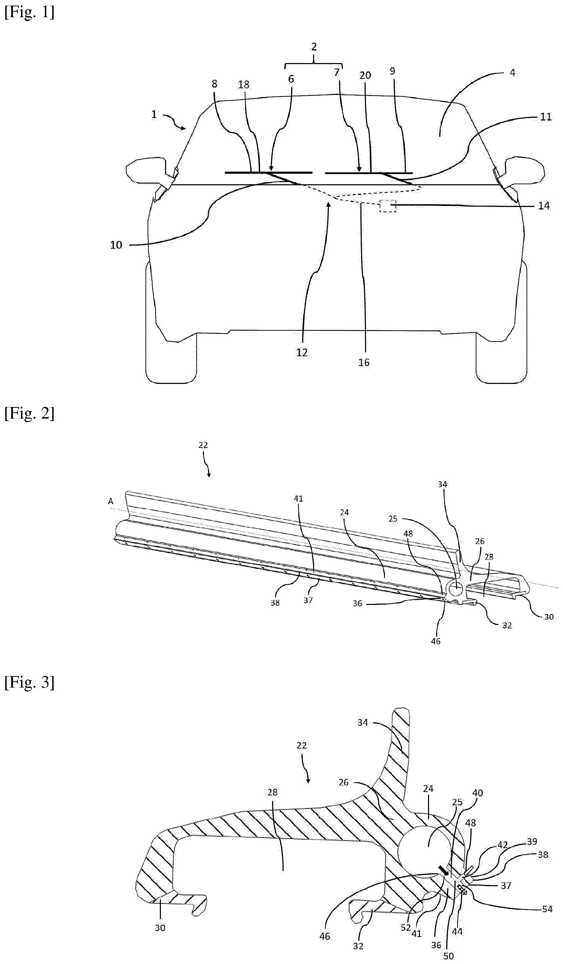

Tel qu'illustré sur la figure 1, un véhicule 1 est équipé d'un système d'essuyage 2 disposé sur une surface vitrée 4 du véhicule 1. Le système d'essuyage 2 comprend au moins un premier dispositif d'essuyage 6. Le premier dispositif d'essuyage 6 comporte un premier balai d'essuyage 8. A titre d'exemple non limitatif, le premier dispositif d'essuyage 6 comporte en outre un premier bras d'essuyage 10. Le premier bras d'essuyage 10 est solidaire par l'une de ses extrémités au véhicule 1 et par l'autre de ses extrémités au premier balai d'essuyage 8, le balai d'essuyage 8 étant disposé sur la surface vitrée 4 du véhicule 1. Plus précisément, le premier bras d'essuyage 10 est solidaire d'un bras d'entrainement constitutif d'un moteur électrique, le bras d'entrainement et le moteur électrique n'étant pas représentés sur l'ensemble des figures.

Le moteur électrique tend à entraîner le premier bras d'essuyage 10 dans un mouvement de va-et-vient, le premier bras d'essuyage 10 entraînant ainsi le premier balai d'essuyage 8 dans ce mouvement de va-et-vient sur la surface vitrée 4 du véhicule 1. Par ce mouvement, le premier bras d'essuyage 10 frotte sur la surface vitrée 4 du véhicule 1 pour la nettoyer. Le système d'essuyage 2 comprend avantageusement un deuxième dispositif d'essuyage 7 comprenant les mêmes caractéristiques que le premier dispositif d'essuyage 6 en comprenant un deuxième balai d'essuyage 9 et une deuxième bras d'essuyage 11.

Le système d'essuyage 2 comprend également un système de nettoyage 12 projetant un fluide nettoyant sur la surface vitrée 4 du véhicule 1. Le système de nettoyage 12 comprend une pompe 14 propulsant à travers un réseau de distribution 16 le fluide nettoyant vers au moins un dispositif de projection 18 selon l'invention. Le réseau de distribution 16 relie la pompe 14 à au moins un premier dispositif de projection 18 ménagé sur le premier balai d'essuyage 8. Le réseau de distribution 16 relie alternativement la pompe 14 à un deuxième dispositif de projection 20 similaire au premier dispositif de projection 18, ce deuxième dispositif de projection 20 étant ménagé sur le deuxième balai d'essuyage 9.

Les composants du deuxième dispositif d'essuyage 7 sont identiques aux composants du premier dispositif d'essuyage 6. Ainsi, la description des caractéristiques des composants du premier dispositif d'essuyage 6 qui suit est applicable aux composants du deuxième dispositif d'essuyage 7, notamment pour le deuxième balai d'essuyage 9 et le deuxième dispositif de projection 20.

Pour rappel, le réseau de distribution 16 relie la pompe 14 à un dispositif de projection 18 ménagé sur le premier balai d'essuyage 8 du système d'essuyage 2. Selon d'autres modes de réalisation, le dispositif de projection 18 est ménagé sur le premier bras d'essuyage 10 ou directement dans le réseau de distribution 16. Plusieurs de ces modes de réalisation seront décrits à la suite de la description détaillée d'un premier mode de réalisation qui va suivre, en référence aux figures 2 et 3.

Le premier dispositif de projection 18, également dénommé dans la suite de la description « dispositif de projection », s'étend dans un déflecteur 22 sous la forme d'une rampe de projection 24. Le déflecteur 22 s'étend principalement le long d'une direction longitudinale A. Le déflecteur 22 se compose d'un corps principal 26 dans lequel est ménagé une cavité de réception 28, cette dernière étant destinée à rendre solidaire le déflecteur 22 du premier balai d'essuyage 8, également dénommé dans la suite de la description « balai d'essuyage ». La cavité de réception 28 s'étend longitudinalement dans le corps principal 26 du déflecteur 22 en prenant globalement la forme d'un parallélépipède rectangle. Trois des côtés du parallélépipède rectangle formé par la cavité de réception 28 sont délimités par le corps principal 26. Le déflecteur 22 comporte une première griffe d'accrochage 30 et une deuxième griffe d'accrochage 32, chacune disposée de part et d'autre du quatrième côté du parallélépipède rectangle formé par la cavité de réception 28 de telle sorte à délimiter partiellement le quatrième côté du parallélépipède rectangle.

Tel que précisé précédemment, le déflecteur 22 est destiné à être solidaire du balai d'essuyage 8. Pour cela, le déflecteur 22 est monté sur le balai d'essuyage 8 en logeant une partie du balai d'essuyage 8 dans la cavité de réception 28. Alternativement, une lame souple non représentée sur l'ensemble des figures est directement montée sur le déflecteur 22 formant ainsi avec le déflecteur 22 le balai d'essuyage 8.

Le déflecteur 22 comprend de plus une aile 34 disposée à l'opposé de la cavité de réception 28 par rapport au corps principal 26 dudit déflecteur 22. L'aile 34 s'étend longitudinalement le long du déflecteur 22 en décrivant une courbe. Lorsque le véhicule 1 est en mouvement, l'air produit une force dynamique sur la forme courbée de l'aile 34 appuyant le déflecteur 22 et le balai d'essuyage 8 sur la surface vitrée 4 du véhicule 1, plaquant ainsi le balai d'essuyage 8 et optimisant le nettoyage et l'essuyage de la surface vitrée 4.

La rampe de projection 24 du déflecteur 22 s'étend longitudinalement le long de la direction longitudinale A dans le corps principal 26 du déflecteur 22. La rampe de projection 24 comprend au moins élément de guidage 25 du fluide nettoyant. L'élément de guidage 25 prend avantageusement la forme d'un tube circulaire s'étendant entre les extrémités longitudinales du déflecteur 22. L'élément de guidage 25 est destiné à être raccordé au niveau de l'une des extrémités longitudinales du déflecteur 22 au réseau de distribution 16 du système de nettoyage 12.

La rampe de projection 24 comprend au moins une buse de projection 36 ou avantageusement une pluralité de buses de projection 36 répartie le long de la rampe de projection 24. La rampe de projection 24 présente une nervure de projection 38 dans laquelle est ménagée la pluralité de buses de projection 18, la nervure de projection 38 s'étendant principalement longitudinalement le long de l'élément de guidage 25 en présentant une face de projection 37, une face d'entrée d'air 39 et une autre face 41. La face d'entrée d'air 39 et l'autre face 41 sont sensiblement parallèles l'une par rapport à l'autre et s'étendent entre le corps principal 28 et la face de projection 37, cette face de projection 37 étant ainsi sensiblement perpendiculaire à la face d'entrée d'air 39 et à l'autre face 41.

Chaque buse de projection 36 comprend un conduit 40 destiné à être parcouru par le fluide nettoyant, un canal 42 destiné à être parcouru par de l'air et une sortie de projection 44, tel qu'illustré sur la figure 3. La sortie de projection 44 est disposé sur la face de projection 37 de la nervure de projection 38.

Le conduit 40 émerge radialement de l'élément de guidage 25 dans la buse de projection 36 ménagée dans la nervure de projection 38. Le conduit 40 est opposé à l'aile 34 par rapport à l'élément de guidage 25. Le conduit 40 s'étend en prenant avantageusement la forme d'un cylindre évidé entre l'élément de guidage 25 et la sortie de projection 44. Plus précisément, le conduit 40 présente une entrée de fluide nettoyant 46, aussi appelée entrée de liquide du fait que le fluide nettoyant est dans le présent exemple un liquide sans que cela restreigne l'utilisation du présent exemple à d'autres fluides, délimitant le conduit 40 et l'élément de guidage 25 de telle sorte que le conduit 40 s'étende entre l'entrée de liquide 46 et la sortie de projection 44. Le conduit 40 s'étend ainsi sensiblement parallèlement à la face d'entrée d'air 39 et à l'autre face 41 de la nervure de projection 38 et sensiblement perpendiculairement à la face de projection 37 de la nervure de projection 38. Le conduit 40 présente en tout point un diamètre inférieur au diamètre de l'élément de guidage 25, le diamètre du conduit 40 étant constant de l'entrée de liquide 46 à la sortie de projection 44. Plus précisément, le diamètre du conduit 40 est compris entre 0,3 et 0,5 millimètres.

La canal 42 émerge radialement du conduit 40 dans la buse de projection 36. De la sorte, l'élément de guidage 25, le conduit 40 et le canal 42 s'étendent chacun dans une direction perpendiculaire les unes par rapport aux autres. Le canal 42 s'étend sous la forme d'un cylindre évidé entre une entrée d'air 48 et le conduit 40, l'entrée d'air 48 étant ménagée sur la face d'entrée d'air 39 de la nervure de projection 38. Ainsi, le canal 42 s'étend sensiblement parallèlement à la face de projection 37 et sensiblement perpendiculairement à la face d'entrée d'air 39 et à l'autre face 41. Le diamètre du canal 42 est en tout point inférieur au diamètre du conduit 40, le diamètre du conduit 40 étant constant entre l'entrée d'air 48 et le conduit 40. Plus précisément, le diamètre du canal 42 est compris entre 0,15 et 0,25 millimètres.

Le canal 42 débouche dans le conduit 40 au niveau d'une zone de mélange 50 séparant en une portion d'entrée 52 et une portion de sortie 54 le conduit 40. La portion d'entrée 52 s'étend entre l'entrée de liquide 46 et la zone de mélange 50 et la portion de sortie 54 s'étend entre la zone de mélange 50 et la sortie de projection 44.

Pour que du fluide nettoyant soit projeté sur la surface vitrée 14, la pompe 14 propulse du fluide nettoyant dans le réseau de distribution 16, le fluide nettoyant étant ainsi propulsé jusqu'à la pluralité de dispositifs de projection 18 de la rampe de projection 24. Le fluide nettoyant circule dans l'élément de guidage 25 depuis le réseau de distribution 16, l'élément de guidage 25 alimentant la pluralité de dispositifs de projection 18 en fluide nettoyant.

Pour chaque buse de projection 18 et selon l'invention, le fluide nettoyant est projeté dans la portion d'entrée 52 du conduit 40 à travers l'entrée de liquide 46 vers la sortie de projection 44, la circulation du fluide nettoyant étant représentée par une flèche pleine sur la figure 3. En circulant dans la zone de mélange 50 le fluide nettoyant provoque une dépression par effet venturi dans la zone de mélange 50 aspirant l'air à l'extérieur du système de nettoyage 12 à travers le canal 42. La zone de mélange 50 devient alors une zone d'expansion favorisant l'apparition d'un colloïde d'air et de fluide nettoyant. L'air traverse ainsi le canal 42 de l'entrée d'air 42 vers la zone de mélange 50, la circulation de l'air dans le canal 42 étant représentée par une flèche vide sur la figure 3. L'air se mélange ensuite avec le fluide nettoyant dans la zone de mélange 50 et forme ainsi un colloïde d'air et de fluide nettoyant. Ce colloïde d'air et de fluide nettoyant circule ensuite dans la portion de sortie 54 du conduit 40 puis est projeté à travers la sortie de projection 44 vers l'extérieur du dispositif de projection 18 avantageusement sur la surface vitrée 4, la circulation du colloïde d'air et de fluide nettoyant étant représentée sur la figure 3 par une flèche hachurée.

Dans cette position, le dispositif de projection 18 projette le colloïde d'air et de fluide nettoyant au plus près de la surface d'essuyage du balai d'essuyage 8, facilitant le nettoyage de surface vitrée 4. De plus, la formation du colloïde d'air et de fluide nettoyant n'entraîne pas de besoin énergétique supplémentaire, la pompe 14 consommant la même quantité d'énergie pour propulser du fluide nettoyant dans une rampe de projection 24 comprenant ou non un canal 42 destiné à être parcouru par de l'air.

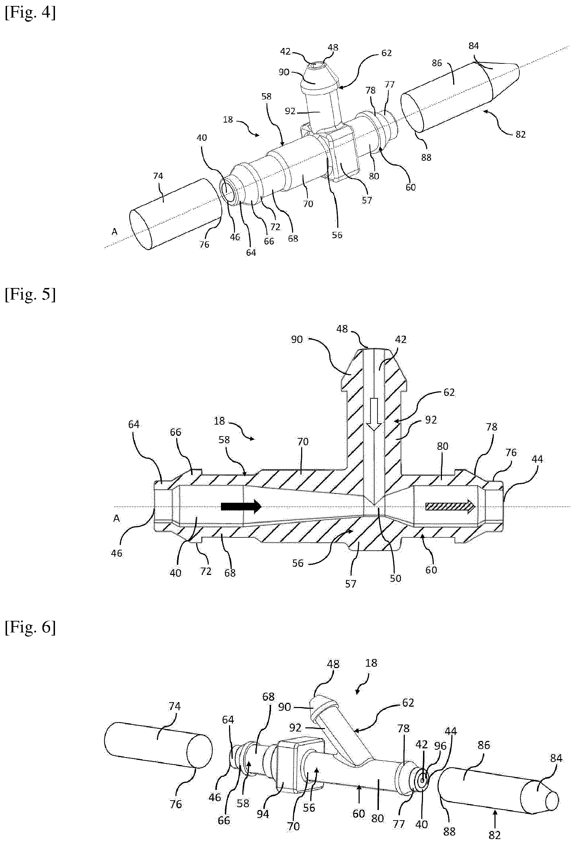

On va maintenant décrire un deuxième mode de réalisation où le dispositif de projection 18 est élément intermédiaire entre le réseau de distribution 16 et une buse de projection en référence aux figures 4 et 5. Certains éléments étant communs à plusieurs modes de réalisation, la dénomination et la référence de ces éléments ont été conservées dans la description qui suit.

Le dispositif de projection 18 présente un corps monobloc 56 dans lequel est ménagé le conduit 40 destiné à être parcouru par le fluide nettoyant et le canal 42 destiné à être parcouru par de l'air. Le conduit 40 s'étend le long d'une direction longitudinale A entre l'entrée de liquide 46 et la sortie de projection 44, le canal 42 s'étendant radialement et perpendiculairement au conduit 40 entre l'entrée d'air 48 et le conduit 40, délimitant la zone de mélange 50, la portion d'entrée 52 et la portion de sortie 54.

L'élément monobloc 56 présente trois sections s'étendant sous la forme d'un « T », chacune des sections étant solidaire d'une chambre de mélange 57, chacune des sections de l'élément monobloc 56 s'étendant sous une forme cylindrique. L'élément monobloc 56 présente ainsi une section d'entrée de liquide 58 s'étendant entre l'entrée de liquide 46 et la chambre de mélange 57, une section de sortie 60 s'étendant entre la chambre de mélange 57 et la sortie de projection 44 et une section d'entrée d'air 62 s'étendant entre l'entrée d'air 48 et la chambre de mélange 57. Le conduit 40 est ménagé entre l'entrée de liquide 46 et la sortie de projection 44 à travers la section d'entrée de liquide 58, la chambre de mélange 57 et la section de sortie 60 de l'élément monobloc 56. Le canal 42 est quant à lui ménagé entre l'entrée d'air 48 et le conduit 40 à travers la section d'entrée d'air 62.

La section d'entrée de liquide 58 présente successivement de l'entrée de liquide 46 vers la chambre de mélange 57 une portion d'admission 64, un premier ergot 66, une première rainure 68 et une portion intermédiaire 70. Le diamètre externe de la portion d'admission 64 est plus petit que le diamètre des autres portions de la section d'entrée de liquide 58. La portion d'admission 64 est délimitée par l'entrée de liquide 46 et le premier ergot 66. Le premier ergot 66 prend la forme d'un chanfrein augmentant le diamètre externe de la portion d'admission 64 jusqu'au plus grand diamètre externe de la section d'entrée de liquide 58, l'augmentation du diamètre étant réalisée de façon continue entre la portion d'admission 64 et une face plate 72 du premier ergot 66. A la suite du premier ergot 66 et selon l'ordre décrit ci-dessus, la section d'entrée de liquide 58 présente la première rainure 68 dont le diamètre externe est compris entre le diamètre externe mesurée au niveau de la portion d'admission 64 et le diamètre externe mesuré au niveau de la face plate 72 du premier ergot 66. La première rainure 68 est délimité d'une part par le premier ergot 66 et d'autre part par la portion intermédiaire 70. La portion intermédiaire 70 s'étend quant à elle entre la première rainure 68 et la chambre de mélange 57 et présente un diamètre externe similaire au diamètre externe mesuré au niveau de la face plate 72 du premier ergot 66. La section d'entrée de liquide 58 présente successivement différentes portions de diamètres différents.

Le dispositif de projection 18 est destiné à être raccordé au réseau de distribution 16 au niveau de la section d'entrée de liquide 58. Pour cela et tel qu'illustré sur la figure 4, le réseau de distribution 16 comporte un tube déformable élastiquement 74 dont une extrémité libre d'admission 76 est destinée à être raccordée à la section d'entrée de liquide 58. Lors du montage du dispositif de projection 18 sur le réseau de distribution 16, la section d'entrée de liquide 58 est insérée dans le tube déformable élastiquement 74 jusqu'à ce que la première rainure 68 soit au niveau de l'extrémité libre d'admission 76. De cette façon, le tube déformable élastiquement 74 est maintenu en position sur la section d'entrée de liquide 58 par le premier ergot 66.

La section de sortie 60 présente des éléments similaires aux éléments de la section d'entrée de liquide 58. En effet, la section de sortie 60 comprend de la sortie de projection 44 vers la chambre de mélange 57 une portion de projection 77, un deuxième ergot 78 et une deuxième rainure 80. Les éléments de la section de sortie 60 sont symétriques à certains éléments de la section d'entrée de liquide 58 et présentent ainsi des caractéristiques similaires. Ainsi, la portion de projection 77 est symétrique à la portion d'admission 64 par rapport à la chambre de mélange 57 et la portion intermédiaire 70, le deuxième ergot 78 est symétrique au premier ergot 66 par rapport à la chambre de mélange 57 et la portion intermédiaire 70 et la deuxième rainure 80 est symétrique à la première rainure 68 par rapport à la chambre de mélange 57 et la portion intermédiaire 70.

Le dispositif de projection 18 est destiné à être raccordé à une buse de projection 82 au niveau de la section de sortie 60. Pour cela et tel qu'illustré sur la figure 4, la buse de projection 82 comprend d'une part un organe de projection 84 et d'autre part un tuyau déformable élastiquement 86 destiné à être raccordé à la section de sortie 60 présentant une extrémité libre de projection 88. Lors du montage du dispositif de projection 18 sur le réseau de distribution 16, la section de sortie 60 est insérée dans le tuyau déformable élastiquement 86 jusqu'à ce que la deuxième rainure 80 soit au niveau de l'extrémité libre de projection 88 de la buse de projection 82. De cette façon, le tuyau déformable élastiquement 86 est maintenu en position sur la section de sortie 60 par le deuxième ergot 78.

La section d'entrée d'air 62 présente similairement à la section d'entrée de liquide 58 et la section de sortie 60 un troisième ergot 90 au niveau de l'entrée d'air 48 et une portion de liaison 92 reliant le troisième ergot 90 à la chambre de mélange 57.

La chambre de mélange 57 comprend la zone de mélange 50 au niveau de laquelle le canal 42 débouche dans le conduit 40. Ici, et à titre d'exemple non limitatif, la chambre de mélange 57 s'étend sous la forme d'un parallélépipède rectangle, délimitant visuellement la zone de mélange 50. La section d'entrée de liquide 58 et la section de sortie 60 s'étendant de part et d'autre de la chambre de mélange 57 au niveau de deux faces parallèles et en regard l'une de l'autre du parallélépipède rectangle, la section d'entrée d'air 62 étant solidaire de la chambre de mélange 57 au niveau d'une face perpendiculaire aux faces solidaires de chambre de mélange 57 de la section d'entrée de liquide 58 et de la section de sortie 60.

L'élément monobloc 56 présente un diamètre interne délimitant le conduit 40 au niveau de la section d'entrée de liquide 58, de la chambre de mélange 57 et de la section de sortie 60. Le diamètre interne de l'élément monobloc 56 varie entre l'entrée de liquide 46 et la sortie de projection 44, approximativement comme la variation du diamètre externe de la section d'entrée de liquide 58 et de la section de sortie 60.

Ainsi, le diamètre interne de l'élément monobloc 56 présente une mesure continue au niveau de la portion d'admission 64, puis la mesure du diamètre interne augmente légèrement au niveau du premier ergot 66 pour s'étendre ensuite de façon continue au niveau de la première rainure 68. Alternativement, le diamètre interne de l'élément monobloc 56 peut être constant entre l'entrée de liquide 46 et la portion intermédiaire 70. Le diamètre interne de l'élément monobloc 56 diminue de façon continue au niveau de la portion intermédiaire 70 jusqu'à atteindre son plus petit diamètre interne au niveau de la zone de mélange 50. A la suite de la zone de mélange 50, le diamètre interne de l'élément monobloc 56 augmente de nouveau pour atteindre au niveau de la deuxième rainure 80 un diamètre similaire au diamètre mesuré au niveau de la première rainure 68. Le diamètre est ensuite réduit au niveau l'orifice de sortie 60, cependant un diamètre continu entre la deuxième rainure 80 et l'orifice de projection 44 ne sortirait pas du cadre de l'invention.

Le diamètre interne de l'élément monobloc 56 au niveau de la section d'entrée d'air 62 délimite la canal 42. Le diamètre interne de l'élément monobloc 56 est continu entre l'entrée d'air 48 et la zone de mélange 50, et le diamètre interne est sensiblement similaire au plus petit diamètre du conduit 40.

Le fluide nettoyant circule dans le conduit 40 du dispositif de projection 18 de l'entrée de liquide 46 vers la sortie de projection 44 en traversant successivement la portion d'entrée 52, la zone de mélange 50, la circulation du fluide nettoyant étant représentée par une flèche pleine sur la figure 5, puis la portion de sortie 54. La réduction du diamètre interne au niveau de la portion intermédiaire 70 de la section d'entrée de liquide 58 entraîne une accélération du débit du fluide nettoyant. Cette augmentation de la vitesse de circulation du liquide lave glace continue jusqu'au niveau de la zone de mélange où la vitesse augmentée devient constante. L'augmentation du diamètre interne de l'élément monobloc 56 au niveau de la section de sortie 60 provoque une diminution du débit du fluide nettoyant, la vitesse d'écoulement redevenant similaire à celle au niveau de la portion d'admission 64.

Cette augmentation de la vitesse d'écoulement du fluide nettoyant au niveau de la zone de mélange 50 forme une dépression dans la zone de mélange 50. Cette dépression entraîne l'aspiration de l'air à travers la section d'entrée d'air 42 dans le canal 42, la circulation de l'air étant représentée par une flèche vide sur la figure 5, l'air se mixant au fluide nettoyant au niveau de la zone de mélange 50 formant ainsi un colloïde d'air et de fluide nettoyant. Le colloïde est ensuite projeté vers la sortie de projection 44 à travers la section de sortie 60 du dispositif de projection 18, la circulation du colloïde étant représentée par une flèche hachurée sur la figure 5, puis circule dans le tuyau déformable élastiquement 86 pour être projeté sur la surface vitrée 4 du véhicule 1 par le biais de l'organe de projection 84 de la buse de projection 82.

Par ailleurs, la distance maximale entre l'organe de projection 84 et la zone de mélange 50 est de 40 millimètres. Au-delà de cette distance maximale, la perte de charge d'un circuit de sortie situé entre l'organe de projection 84 et la zone de mélange 50 et emprunté par le colloïde est supérieure à celle d'un circuit d'air situé entre l'entrée d'air 48 et la zone de de mélange 50. En conséquence, le fluide nettoyant est propulsé dans le circuit d'air au lieu du circuit de sortie.

Il convient de noter qu'on peut également ajuster les dimensions du conduit 40 et du canal 42 en combinaison avec ladite distance maximale de façon à empêcher le fluide nettoyant d'être propulsé dans le canal 42 destiné à être parcouru par de l'air.

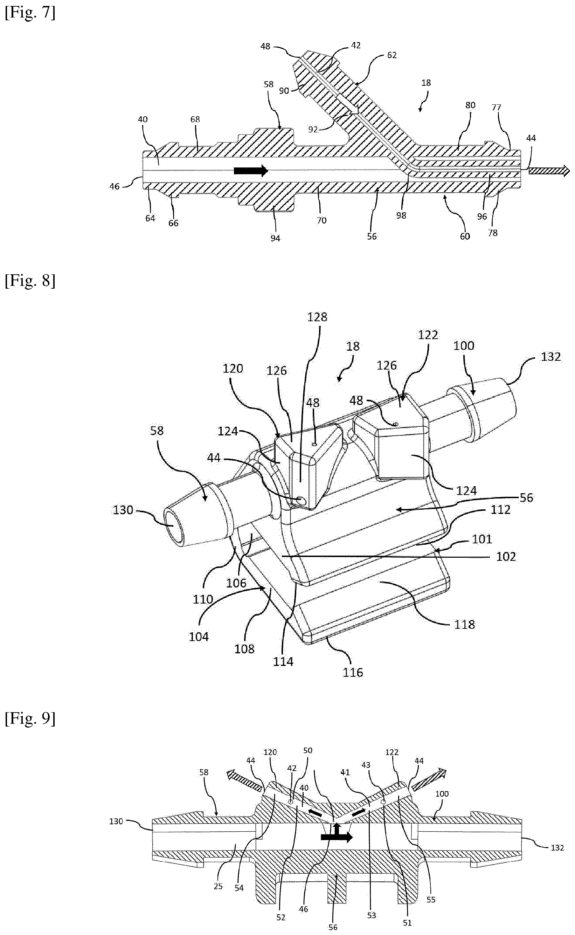

On va maintenant décrire un troisième mode de réalisation où le dispositif de projection 18 est également un élément intermédiaire entre le réseau de distribution et une buse de projection en référence aux figures 6 et 7, dans lequel la section d'entrée d'air 62 s'étend en partie dans le conduit 40 jusqu'à la sortie de projection 44. Pour rappel, certains éléments étant communs à plusieurs modes de réalisation, la dénomination et la référence de ces éléments ont été conservées dans la description qui suit.

Pour rappel, le corps monobloc 56 du dispositif de projection 18 présente la section d'entrée de liquide 58, la section d'entrée d'air 62 et la section de sortie 60. La section d'entrée de liquide 58 comprend successivement de l'entrée de liquide 46 vers la section de sortie 60 la portion d'admission 64, le premier ergot 66, la première rainure 68, une structure 94, ici par exemple cubique et la portion intermédiaire 70. La portion d'admission 64, le premier ergot 66, la première rainure 68 et la portion intermédiaire 70 présentant les mêmes caractéristiques externes que celles décrites dans le deuxième mode de réalisation. La structure cubique 94 est ménagée entre la première rainure 68 et la portion intermédiaire 70. Comme précédemment, la section de sortie 60 comporte également et successivement de la sortie de projection 44 vers la portion d'entrée de liquide 58 la portion de projection 77, le deuxième ergot 78 et la deuxième rainure 80.

Selon l'invention, le conduit 40 s'étend entre l'entrée de liquide 46 et la sortie de projection 44 en étant délimité par un diamètre interne de la section d'entrée de liquide 58 et la section de sortie 60. Le diamètre interne du corps monobloc 56 de la section d'entrée de liquide 58 et de la section de sortie 60 est constant de l'entrée de liquide 46 jusqu'à la sortie de projection 44 et ne présente pas de variation du diamètre interne.

La section d'entrée d'air 62 comporte le troisième ergot 90 disposé au niveau de l'entrée d'air 48 et la portion de liaison 92 reliant le troisième ergot 90 à la section d'entrée de liquide 58 et à la section de sortie 60. Le diamètre externe de la portion de liaison 92 est similaire au diamètre externe de la portion intermédiaire 70 de la section d'entrée de liquide 58 et au diamètre externe de la deuxième rainure 80 de la section de sortie 60. La section d'entrée d'air 62 émerge du corps monobloc selon un angle de sensiblement 90° par rapport à la section d'entrée de liquide 58. Cependant l'angle formé par l'émergence de la section d'entrée d'air 62 peut être compris entre 20° et 90°, et peut être mesuré à partir de la section d'entrée de liquide 58 ou de la section de sortie 60 sans pour autant sortir de l'invention.

La section d'entrée d'air 62 comprend le canal 42 destiné à être parcouru par de l'air, le canal 42 étant délimité par un diamètre interne du corps monobloc 56 au niveau de la section d'entrée d'air 62. Le diamètre interne du corps monobloc 56 délimitant le canal 42 est plus petit que le diamètre interne du corps monobloc 56 délimitant le conduit 40.

Le corps monobloc 56 au niveau de la section de sortie 60 présente une extension 96 de la section d'entrée d'air 62 s'étendant dans le conduit 40. Le diamètre externe de l'extension 96 est plus petit que le diamètre interne du corps monobloc 56 au niveau de la portion de sortie 60 de sorte à présenter un espace suffisant entre l'extension 96 et la paroi interne du conduit 40 pour laisser libre circulation au fluide nettoyant autour de l'extension 96.

L'extension 96 s'étend dans le conduit 40 selon la même direction d'extension que la direction d'extension de la portion de sortie 60. Ainsi, la direction d'extension de l'extension 96 et la direction d'extension de la portion de sortie 60 sont ici confondues. Cependant, la direction d'extension de l'extension 96 et la direction d'extension de la portion de sortie 60 peuvent être parallèles et non confondues sans pour autant sortir du cadre de l'invention. La section d'entrée d'air 62 ne s'étendant pas le long de la même direction d'extension que celle de l'extension 96, l'extension 96 présente un coude 98 orientant le canal 42 le long de la direction d'extension de l'extension 96 à partir de la direction d'extension de la section d'entrée d'air 62. Le canal 42 s'étend de l'entrée d'air 48 vers la sortie de projection 44 à travers la section d'entrée d'air 62 et l'extension 96. En effet, le canal 42 destiné à être parcouru par de l'air débouche directement au niveau de la sortie de projection 44.

Le fluide nettoyant est projeté par la pompe 14 dans le réseau de distribution, puis dans le tube déformable élastiquement 74 distribuant le fluide nettoyant dans le dispositif de projection 18, en particulier au niveau de l'entrée de liquide 46 de la section d'entrée de liquide 58. Le fluide nettoyant parcourt ensuite le conduit 40 de l'entrée de liquide 46 jusqu'à la sortie de projection 44, la circulation du fluide nettoyant étant représentée par une flèche pleine sur la figure 7. La vitesse d'écoulement du fluide nettoyant augmente au niveau de la section de sortie 60, la présence de l'extension 96 dans le conduit 40 réduit l'espace d'écoulement du liquide lave glace, le débit de fluide nettoyant restant cependant constant.

Le fluide nettoyant circulant ainsi autour de l'extension 96 est projeté du conduit 40 au niveau de la sortie de projection 44 vers le tuyau déformable élastiquement 86 de la buse de projection 82 en formant un anneau, le centre de l'anneau représentant l'extension 96. Par la vitesse de projection du fluide nettoyant, une dépression se forme au centre de l'anneau au niveau de la sortie de projection 44 en regard du canal 42. Cette dépression provoque l'aspiration d'air dans le canal 42, l'air aspiré traverse ainsi successivement l'entrée d'air 48, le canal 42 au niveau de la section d'entrée d'air 62, le coude 98, le canal 42 au niveau de la section de sortie 60 puis la sortie de projection 44, la circulation de l'air étant représentée par une flèche vide sur la figure 7. En étant projeté ainsi dans le tuyau déformable élastique 86 de la buse de projection 82, l'air est mixé au fluide nettoyant formant ainsi un colloïde d'air et de fluide nettoyant circulant dans le tuyau déformable élastiquement 86 de la buse de projection 82. Le colloïde circule vers l'organe de projection 84 de la buse de projection par lequel le colloïde est projeté sur la surface vitrée 4, la circulation du colloïde étant représentée par une flèche hachurée sur la figure 7.

Par ailleurs et similairement aux premier et deuxième modes de réalisation, la distance maximale entre l'organe de projection 84 et la sortie de projection 44 est de 400 millimètres plus ou moins 10%, le colloïde devenant ensuite plus liquide au-delà de cette distance.

On va maintenant décrire un quatrième mode de réalisation où le dispositif de projection 18 est un élément de fixation au bras 10, 11 du système d'essuyage 2 reliant le réseau de distribution 16 à un autre dispositif de projection en référence aux figures 8 et 9. Le dispositif de projection 18 comprend ici deux conduits 40, deux canaux 42 et deux orifices de projection 44. Pour rappel, certains éléments étant communs à plusieurs modes de réalisation, la dénomination et la référence de ces éléments ont été conservées dans la description qui suit.

L'élément monobloc 56 du dispositif de projection 18 comprend une section d'entrée de liquide 58 et une section de sortie de liquide 100 dans lesquelles sont ménagées l'élément de guidage 25. L'élément monobloc 56 comprend un organe de fixation 101 comprenant principalement une paroi de support 102 et une patte déformable élastiquement 104, une première partie 106 de la patte déformable élastiquement 104 s'étendant perpendiculairement à la paroi de support 102 et une deuxième partie 108 de la patte déformable élastiquement 104 s'étendant parallèlement à la paroi de support 102.

De la sorte, chaque partie 106, 108 de la patte déformable élastiquement 104 s'étend dans un plan différent, les parties 106, 108 de la patte déformable élastiquement 104 étant solidaire l'une de l'autre au niveau de l'une de leurs extrémités formant un coin 110. La deuxième partie 108 de la patte déformable élastiquement 104 s'étend parallèlement et en regard de la paroi de support 102, la deuxième partie 108 étant opposée à l'élément de guidage 25 par rapport à la paroi de support 102. La première partie 106 de la patte déformable élastiquement 104 s'étend entre une extrémité de la deuxième partie 108 de la patte de déformable élastiquement 104 et une extrémité de la paroi de support 102 de telle sorte à ce que l'organe de fixation 101 prenne la forme d'un « U ».

La paroi de support 102 présente une première extrémité libre 112 à l'opposé de la première partie 106 de la patte déformable élastiquement 104. La première extrémité libre 112 présente une première butée 114 tournée vers l'intérieur de l'organe de fixation 101. Similairement, la deuxième partie 108 de la patte déformable élastiquement 104 présente une deuxième extrémité libre 116 opposée au coin 110. Cette deuxième extrémité libre 116 de la patte déformable élastiquement 104 présente aussi une deuxième butée 118 tournée vers l'intérieur de l'organe de fixation 101.

Par cette forme, le dispositif de projection 18 peut être fixé sur le premier bras 10 ou le deuxième bras 12 du système d'essuyage 2, l'organe de fixation 101 étant destiné à loger une partie du premier ou du deuxième bras 10, 11 du système d'essuyage 2. En effet, le dispositif de projection 18 est positionné sur le premier bras 10 ou le deuxième bras 12 du système d'essuyage 2 de sorte que l'organe de fixation 101 entoure partiellement une partie du premier bras 10 ou du deuxième bras 11 du système d'essuyage 2. Lors du montage du dispositif de protection 18 sur le premier bras 10 ou le deuxième bras 11, la patte déformable élastiquement 104 est légèrement déformée pour permettre à une partie du premier bras 10 ou du deuxième bras 11 de se loger dans l'organe de fixation 101. Les butées 114, 118 de l'organe de fixation 101 assure le maintien en position du dispositif de projection 18 sur le premier bras 10 ou le deuxième bras 11 en empêchant la partie du premier bras 10 ou du deuxième bras 11 d'être délogée de l'organe de fixation 101.

L'élément monobloc 56 comprend une première buse 120 et une deuxième buse 122 opposées à l'organe de fixation 101 par rapport à l'élément de guidage 25. La première buse 120 est ménagée proche de la section d'entrée de liquide 58 alors que la deuxième buse 122 est plus proche de la section de sortie de liquide 100. Chacune des buses 120, 122 de l'élément monobloc 56 comprend une pluralité de faces 124 dont une face externe 126, avantageusement opposée à l'élément de guidage 25 par rapport à la buse 120, 122, sur laquelle est ménagée l'entrée d'air 48 et une face d'expulsion 128, sensiblement perpendiculaire à la direction d'extension de l'élément de guidage 25, sur laquelle est ménagée la sortie de projection 44.

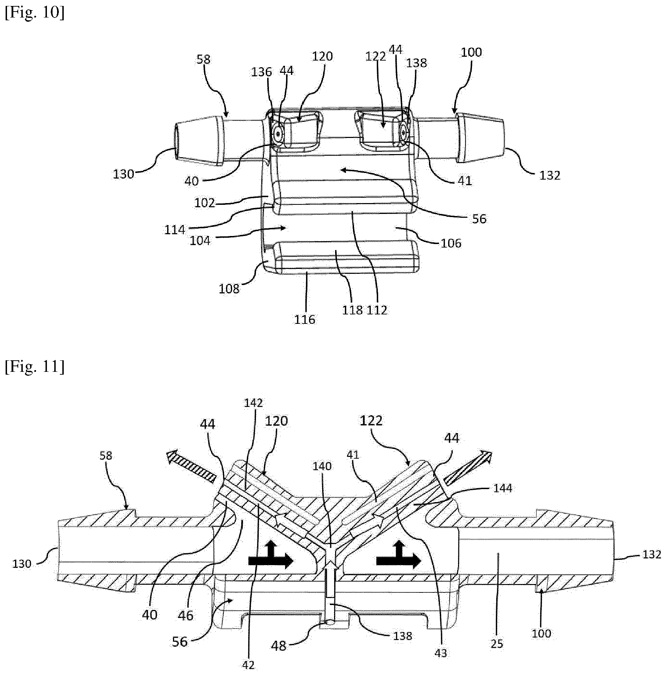

Tel qu'illustré sur la figure 10, l'élément de guidage 25 s'étend entre une bouche d'entrée 130 ménagée à l'extrémité libre de la section d'entrée de liquide 58 et une bouche de sortie 132 ménagée à l'extrémité libre de la section de sortie de liquide 100 formant un cylindre évidé. Au niveau du centre de l'élément de guidage 25, c'est-à-dire à même distance de la bouche d'entrée 130 et de la bouche de sortie 132, l'élément de guidage 25 présente l'entrée de liquide 46 émergeant ensuite sur un premier conduit 40 destiné à être parcouru par le fluide nettoyant et un deuxième conduit 45 destiné à être parcouru par le fluide nettoyant.

Le premier conduit 40 s'étend entre l'entrée de liquide 46 et la sortie de projection 44 de la première buse 120. Le diamètre interne de la première buse 120 délimite le premier conduit 40, le diamètre interne de la première buse 120 étant constant tout le long du premier conduit 40. Le premier conduit 40 présente une première portion d'entrée 52 et une première portion de sortie 54 séparées par une première zone de mélange 50, la première portion de sortie 52 s'étendant entre l'entrée de liquide 46 et la première zone de mélange 50 et la première portion d'entrée 54 s'étendant entre la première zone de mélange 50 et la sortie de projection 44 de la première buse 120.

Un premier canal 42 destiné à être parcouru par de l'air débouche dans le premier conduit 40 au niveau de la première zone de mélange 50. Le premier canal 42 s'étend entre l'entrée d'air 48 positionnée sur la face externe 126 de la première buse 120 et la première zone de mélange 50 et est délimité par un diamètre interne de la première buse 120. Ici aussi, le diamètre interne de la première buse 120 est avantageusement constant tout le long du premier canal 42.

Symétriquement par rapport à un plan passant par le centre de l'élément de guidage, le deuxième conduit 45 s'étend entre l'entrée de liquide 46 et la sortie de projection 44 de la deuxième buse 122. Le diamètre interne de la deuxième buse 122 délimite le deuxième conduit 45, le diamètre interne de la deuxième buse 122 étant constant tout le long du deuxième conduit 45. Le deuxième conduit 45 présente une deuxième portion d'entrée 53 et une deuxième portion de sortie 55 séparées par une deuxième zone de mélange 51, la deuxième portion de sortie 53 s'étendant entre l'entrée de liquide 46 et la deuxième zone de mélange 51 et la deuxième portion d'entrée 55 s'étendant entre la deuxième zone de mélange 51 et la sortie de projection 44 de la deuxième buse 122.

Un deuxième canal 43 destiné à être parcouru par de l'air débouche dans le deuxième conduit 45 au niveau de la deuxième zone de mélange 51. Le deuxième canal 43 s'étend entre l'entrée d'air 48 positionnée sur la face externe 126 de la deuxième buse 122 et la deuxième zone de mélange 51 et est délimité par un diamètre interne de la deuxième buse 122. Ici aussi, le diamètre interne de la deuxième buse 122 est avantageusement constant tout le long du deuxième canal 43.

Lorsque le fluide nettoyant circule dans le réseau de distribution 16 du système de nettoyage 12, le fluide nettoyant arrive au niveau de la bouche d'entrée 130 de l'élément de guidage 25. Le fluide nettoyant traverse l'élément de guidage 25 de la bouche d'entrée 130 vers la bouche de sortie 132, pour circuler ensuite dans un tuyau non représenté sur l'ensemble des figures vers un balai d'essuyage, la circulation du fluide nettoyant étant représentée par des flèches pleines sur la figure 9. De plus, le fluide nettoyant circule à travers l'entrée de liquide 46 pour traverser ensuite le premier conduit 40 et le deuxième conduit 45 vers leurs sorties de mousse 44 respectifs. Ainsi, lorsque le fluide nettoyant traverse la zone de mélange 50, 51 de chacun des conduits 40, 45 du dispositif de projection 18, une dépression est provoquée au niveau de la zone de mélange 50, 51 aspirant de l'air à travers les canaux 42, 43 de l'entrée d'air 48 vers la zone de mélange 50, 51 respective. L'air se mixe alors au fluide nettoyant formant un colloïde d'air et de fluide nettoyant. ce colloïde traverse ensuite la portion de sortie 54, 55 de chacun des conduits 40, 45 pour être projetée sur la surface vitrée 4 à travers la sortie de projection 44, la projection du colloïde à travers la première buse 120 et la deuxième buse 122 se faisant simultanément, la circulation du colloïde étant représentée par des flèches hachurées sur la figure 9.

On va maintenant décrire un cinquième mode de réalisation où le dispositif de projection 18 est un élément de fixation au bras 10, 11 du système d'essuyage 2 reliant le réseau de distribution 16 à un autre dispositif de projection en référence aux figures 10 et 11. Le dispositif de projection 18 comprend ici deux conduits 40, deux canaux 42 et deux orifices de projection 44, une partie des canaux 42 s'étendant dans les conduits 40. Pour rappel, certains éléments étant communs à plusieurs modes de réalisation, la dénomination et la référence de ces éléments ont été conservées dans la description qui suit.

Le corps monobloc 56 du dispositif de projection 18 comprend un organe de fixation 101 tel que décrit précédemment, un élément de guidage 25 présentant une section d'entrée de liquide 58 et une section de sortie de liquide 100, et une première buse 120 et une deuxième buse 122. Le dispositif de projection 18 tel qu'illustré sur les figures 11 et 12 présente une structure symétrique selon un plan passant par le centre de l'élément de guidage 25. Ainsi, la section d'entrée de liquide 58 est symétrique de la section de sortie de liquide 100 par rapport au plan passant par le centre de l'élément de guidage 25. Par ailleurs, la deuxième buse 122 est également symétrique de la première buse 120 par rapport au plan passant par le centre de l'élément de guidage 25. La description d'une caractéristique de l'une des buses 120, 122 est également applicable à l'autre buse 120, 122.

La première buse 120 et la deuxième buse 122 s'étendent principalement dans un plan parallèle à la paroi de support 102, vers les extrémités libres 112, 116 de l'organe de fixation 101 au niveau de l'élément de guidage 25. La première buse 120 comprend une première face de projection 134 orientée vers la section d'entrée de liquide 58 de l'élément de guidage 25. La deuxième buse 122 comprend une deuxième face de projection 136 orientée quant à elle vers la section de sortie de liquide 100. Chacune des faces de projection 134, 136 des buses 120, 122 présentent une sortie de projection 44.

Plus particulièrement et tel qu'illustré sur la figure 11, l'élément de guidage 25 s'étend entre la bouche d'entrée 130 de la section d'entrée de liquide 58 et la bouche de sortie 132 de la section de sortie de liquide 100, l'élément de guidage 25 formant un cylindre évidé de diamètre constant entre la bouche d'entrée 130 et la bouche de sortie 132. L'élément de guidage 25 présente une entrée de liquide 46 centré entre la bouche d'entrée 130 et la bouche des sortie 132.

L'entrée de liquide 46 s'étend le long de l'élément de guidage 25 entre la première buse 120 et la deuxième buse 122. La première buse 120 comprend un premier conduit 40 destiné à être parcouru par le fluide nettoyant s'étendant de l'entrée de liquide 46 jusqu'à la sortie de projection 44 de la première buse 120. Symétriquement, la deuxième buse comprend un deuxième conduit 45 destiné à être parcouru par le fluide nettoyant s'étendant de l'entrée de liquide 46 jusqu'à la sortie de projection 44 de la deuxième buse 122. Les conduits 40, 45 sont délimités par le diamètre interne de chaque buse 120, 122.

Le corps monobloc 56 comprend une entrée d'air 46 opposée aux buses 120, 122 par rapport à l'élément de guidage 25. L'entrée d'air 46 se prolonge en un canal principal 138 destiné à être parcouru par de l'air dans une section d'entrée d'air principale 62. La section d'entrée d'air principale 62 s'étend en partie perpendiculairement à l'élément de guidage 25 de l'entrée d'air 46 vers les buses 120, 122. La section d'entrée d'air principale 62 comprend une intersection 140 ménagée au niveau de l'entrée de liquide 46 scindant la section d'entrée d'air principal 62 en une première section de sortie d'air 142, s'étendant de l'intersection 140 vers la sortie de projection 44 de la première buse 120, et en une deuxième section de sortie d'air 144, s'étendant de l'intersection 140 vers la sortie de projection 144 de la deuxième buse 122. L'intersection 140 scinde également le canal principal 138 en un premier canal 42 et en un second canal 43.

La première section de sortie d'air 142 s'étend ainsi dans le premier conduit 40, la première section de sortie d'air 142 présentant un diamètre externe plus petit que le diamètre interne de la première buse 120 délimitant le premier conduit 40. Symétriquement, la deuxième section de sortie d'air 144 s'étend ainsi dans le deuxième conduit 45, la deuxième section de sortie d'air 144 présentant un diamètre externe plus petit que le diamètre interne de la deuxième buse 122 délimitant le deuxième conduit 45.

De cette façon, le premier conduit 40 et le premier canal 42 débouche au niveau de la sortie de projection 44 de la première buse 120. Symétriquement, le deuxième conduit 45 et le deuxième canal 43 débouche au niveau de la sortie de projection 44 de la deuxième buse 122.

Lorsque du fluide nettoyant circule dans le réseau de distribution 16, du fluide nettoyant est projeté dans le dispositif de projection 18 notamment au niveau de l'élément de guidage 25, la circulation du fluide nettoyant étant représentée par des flèches pleines sur la figure 11. Ainsi, le fluide nettoyant traverse l'élément de guidage 25 de la bouche d'entrée 130 vers la bouche de sortie 132, circulant ensuite dans un tuyau vers un balai d'essuyage. Une partie du fluide nettoyant circule à travers l'entrée de liquide 46 puis dans les conduits 40, 45 vers les sorties de mousse 44 des buses 120, 122. La vitesse d'écoulement du fluide nettoyant augmente au dans les conduits 40, 45, la présence des sections de sortie d'air 142, 144 dans les conduits 40, 45 réduit l'espace d'écoulement du liquide lave glace, le débit de fluide nettoyant restant cependant constant.

Le fluide nettoyant circule dans les conduits 40, 45 autour des sections de sortie d'air 142, 144, puis est projeté à travers les sorties de mousse 44 sous la forme d'anneaux, le centre des anneaux étant l'une des sections de sortie d'air 142, 144 et les canaux 42, 43. Par la vitesse de projection du fluide nettoyant, une dépression se forme au centre des anneaux au niveau des sorties de mousse 44 en regard des canaux 42, 43. Cette dépression provoque l'aspiration d'air dans les canaux 42, 43, l'air aspiré traversant successivement l'entrée d'air 48, le canal principal 138 puis le premier canal 42 ou le premier canal 43 pour finir par être projeté au niveau des sorties de mousse 44, la circulation de l'air étant représentée par des flèches vides sur la figure 11. Ainsi projeté, l'air est mixé au fluide nettoyant formant ainsi un colloïde d'air et de fluide nettoyant projeté sur la surface vitré 4, la circulation du colloïde d'air et de liquide lave glace étant représentée par des flèches hachurées sur la figure 11.

L'invention concerne aussi un dispositif de projection d'un système de nettoyage, le dispositif de projection une entrée de liquide se prolongeant en un conduit destiné à être parcouru par un liquide et s'étendant vers une sortie de projection, caractérisé en ce que le dispositif de projection comprend au moins un canal destiné à être parcouru par de l'air s'étendant depuis une entrée d'air vers le conduit.

L'invention ne saurait toutefois se limiter aux moyens et configurations décrits et illustrés ici.

En particulier, la disposition du canal dans le conduit dans certains modes de réalisation peut alternativement être colinéaire, tel qu'illustré ici, ou disposer le long de directions parallèles non confondues tout en débouchant au niveau d'une même sortie de projection.

## Revendications

1. Système de nettoyage (12) d'une surface vitrée (4) d'un véhicule (1), comprenant un dispositif de projection (18) de fluide nettoyant sur la surface vitrée (4) et un réseau de distribution (16) destiné à fournir le fluide nettoyant au dispositif de projection (18), le dispositif de projection (18) ou le réseau de distribution (16) comprenant un élément mélangeur (36 ; 56 ; 120, 122) avec au moins une entrée de fluide nettoyant (46), une entrée d'air (48) et une sortie de projection (44), l'élément mélangeur (36 ; 56 ; 120, 122) comprenant au moins un conduit (40, 41) destiné à être parcouru par le fluide nettoyant et en communication avec l'entrée de fluide nettoyant (46) et la sortie de projection (44), l'élément mélangeur (36 ; 56 ; 120, 122) comprenant un canal (42, 43) destiné à être parcouru par de l'air en communication avec l'entrée d'air (48) et le conduit (40, 41), dans lequel l'élément mélangeur (36 ; 56 ; 120, 122) comprend un élément monobloc (56) qui délimite le conduit (40, 41) destiné à être parcouru par le fluide nettoyant et le canal (42, 43) destiné à être parcouru par de l'air, **caractérisé en ce que** le dispositif de projection (18) est une rampe de projection (24), la rampe de projection (24) étant configurée pour être montée sur ou dans un balai d'essuyage (8, 9), la rampe de projection (24) s'étendant le long du balai d'essuyage (8, 9).

2. Système de nettoyage (12) selon la revendication 1, dans lequel le conduit (40, 41) destiné à être parcouru par le fluide nettoyant présente une restriction de section (50, 51) dans laquelle débouche le canal (42, 43) destiné à être parcouru par de l'air.

3. Système de nettoyage (12) selon l'une quelconque des revendications précédentes, dans lequel le conduit (40, 41) destiné à être parcouru par le fluide nettoyant s'étend perpendiculairement au canal (42, 43) destiné à être parcouru par de l'air.

4. Système de nettoyage (12) selon l'une quelconque des revendications précédentes, dans le canal (42, 43) destiné à être parcouru par de l'air présente en tout point une section inférieure à une section du conduit (40, 41) destiné à être parcouru par le fluide nettoyant.

5. Système de nettoyage (12) selon l'une quelconque des revendications précédentes, dans lequel le conduit (40, 41) destiné à être parcouru par le fluide nettoyant est ménagé dans un corps monobloc (96 ; 142, 144) de l'élément mélangeur (36 ; 56 ; 120, 122) et dans lequel le canal (42, 43) destiné à être parcouru par de l'air est délimité par une portion du corps monobloc (96 ; 142, 144) s'étendant dans le conduit (40, 41).

6. Système de nettoyage (12) selon la revendication 5, dans lequel un diamètre externe de la portion du corps (96 ; 142, 144) délimitant le canal (42, 43) destiné à être parcouru par de l'air est plus petit qu'un diamètre interne du conduit (40, 41) destiné à être parcouru par le fluide nettoyant.

7. Système de nettoyage (12) selon l'une quelconque des revendications 5 ou 6, dans lequel la portion du corps (96 ; 142, 144) délimitant le canal (42, 43) destiné à être parcouru par de l'air et le conduit (40, 41) destiné à être parcouru par le fluide nettoyant s'étendent le long d'une même direction.

8. Système de nettoyage (12) selon l'une quelconque des revendications, dans lequel la rampe de projection (24) comprend le conduit (40, 41) destiné à être parcouru par le fluide nettoyant, au moins deux sorties de mousse (44) chacune reliée au conduit (40, 41) par une buse (36 ; 120, 122), et le canal (42, 43) destiné à être parcouru par de l'air ménagé dans chacune des buses (36 ; 120, 122).

9. Système d'essuyage (2) comprenant au moins un dispositif d'essuyage (6, 7) et un système de nettoyage (12) d'une surface vitrée (4) d'un véhicule (1) selon l'une quelconque des revendications précédentes.

10. Système d'essuyage (2) selon la revendication 9, dans lequel le dispositif d'essuyage (6, 7) comprend un balai d'essuyage (8, 9).

11. Système d'essuyage (2) selon la revendication 10, dans lequel le dispositif d'essuyage (6, 7) comprend un bras d'essuyage (10, 11).

## Patentansprüche

1. System zum Reinigen (12) einer Glasfläche (4) eines Fahrzeugs (1), das eine Vorrichtung (18) zum Spritzen von Reinigungsfluid auf die Glasfläche (4) und ein Verteilungsnetz (16) zum Zuführen des Reinigungsfluids zu der Spritzvorrichtung (18) umfasst, wobei die Spritzvorrichtung (18) oder das Verteilungsnetz (16) ein Mischelement (36 ; 56; 120, 122) mit mindestens einem Reinigungsfluideinlass (46), einem Lufteinlass (48) und einem Strahlauslass (44) umfasst, wobei das Mischelement (36; 56; 120, 122) mindestens eine Leitung (40, 41) umfasst, die von dem Reinigungsfluid durchströmt werden soll und mit dem Reinigungsfluideinlass (46) und dem Strahlauslass (44) in Verbindung steht, wobei das Mischelement (36 ; 56; 120, 122) einen Kanal (42, 43) umfasst, der von Luft durchströmt werden soll und mit dem Luftkanal (48) und der Leitung (40, 41) in Verbindung steht, wobei das Mischelement (36; 56 ; 120, 122) ein einstückiges Element (56) umfasst, das den Kanal (40, 41), der von dem Reinigungsfluid durchströmt werden soll, und den Kanal (42, 43), der von Luft durchströmt werden soll, begrenzt, **dadurch gekennzeichnet, dass** wobei die Spritzvorrichtung (18) eine Spritzleiste (24) ist, die so konfiguriert ist, dass sie an oder in einem Wischblatt (8, 9) angebracht werden kann, wobei sich die Spritzleiste (24) entlang des Wischblatts (8, 9) erstreckt.

2. Reinigungssystem (12) nach Anspruch 1, bei dem der Kanal (40, 41), der von der Reinigungsflüssigkeit durchströmt werden soll, eine Querschnittsverengung (50, 51) aufweist, in die der Kanal (42, 43) mündet, der von Luft durchströmt werden soll.

3. Reinigungssystem (12) nach einem der vorhergehenden Ansprüche, wobei sich der Kanal (40, 41), der von dem Reinigungsfluid durchströmt werden soll, senkrecht zu dem Kanal (42, 43), der von Luft durchströmt werden soll, erstreckt.

4. Reinigungssystem (12) nach einem der vorhergehenden Ansprüche, wobei der Kanal (42, 43), der dazu bestimmt ist, von Luft durchströmt zu werden, an jeder Stelle einen Querschnitt aufweist, der kleiner ist als ein Querschnitt des Kanals (40, 41), der dazu bestimmt ist, von dem Reinigungsfluid durchströmt zu werden.

5. Reinigungssystem (12) nach einem der vorhergehenden Ansprüche, wobei der Kanal (40, 41), der von dem Reinigungsfluid durchströmt werden soll, in einem einteiligen Körper (96; 142, 144) des Mischelements (36; 56; 120, 122) ausgebildet ist und wobei der Kanal (42, 43), der von Luft durchströmt werden soll, von einem Abschnitt des einteiligen Körpers (96; 142, 144) begrenzt wird, der sich in den Kanal (40, 41) hinein erstreckt.

6. Reinigungssystem (12) nach Anspruch 5, wobei ein Außendurchmesser des Abschnitts des Körpers (96; 142, 144), der den Kanal (42, 43) begrenzt, der dazu bestimmt ist, von Luft durchströmt zu werden, kleiner ist als ein Innendurchmesser des Kanals (40, 41), der dazu bestimmt ist, von der Reinigungsflüssigkeit durchströmt zu werden.

7. Reinigungssystem (12) nach einem der Ansprüche 5 oder 6, wobei der Abschnitt des Körpers (96; 142, 144), der den Kanal (42, 43) begrenzt, der von Luft durchströmt werden soll, und der Kanal (40, 41), der von der Reinigungsflüssigkeit durchströmt werden soll, sich entlang einer gleichen Richtung erstrecken.

8. Reinigungssystem (12) nach einem der Ansprüche, wobei die Spritzleiste (24) die Leitung (40, 41), die von dem Reinigungsfluid durchströmt werden soll, mindestens zwei Schaumauslässe (44), die jeweils über eine Düse (36; 120, 122) mit der Leitung (40, 41) verbunden sind, und den Kanal (42, 43), der von Luft durchströmt werden soll, die in jeder der Düsen (36; 120, 122) vorgesehen ist, umfasst.

9. Wischsystem (2) mit mindestens einer Wischvorrichtung (6, 7) und einem Reinigungssystem (12) für eine Glasfläche (4) eines Fahrzeugs (1) nach einem der vorhergehenden Ansprüche.

10. Wischsystem (2) nach Anspruch 9, wobei die Wischvorrichtung (6, 7) ein Wischblatt (8, 9) umfasst.

11. Wischsystem (2) nach Anspruch 10, wobei die Wischvorrichtung (6, 7) einen Wischarm (10, 11) umfasst.

## Claims

1. Cleaning system (12) for a glazed surface (4) of a vehicle (1), comprising a spraying device (18) for spraying cleaning fluid onto the glazed surface (4) and a distribution network (16) for supplying the cleaning fluid to the spraying device (18), the spraying device (18) or the distribution network (16) comprising a mixing element (36 ; 56; 120, 122) with at least one cleaning fluid inlet (46), an air inlet (48) and a spray outlet (44), the mixing element (36; 56; 120, 122) comprising at least one duct (40, 41) through which the cleaning fluid is to flow and which is in communication with the cleaning fluid inlet (46) and the spray outlet (44), the mixing element (36 ; 56; 120, 122) comprising a channel (42, 43) for air flow in communication with the air inlet (48) and the duct (40, 41), wherein the mixing element (36; 56 ; 120, 122) comprises a one-piece element (56) which delimits the duct (40, 41) for the cleaning fluid to flow through and the channel (42, 43) for air to flow through, **characterized in that** wherein the spray device (18) is a spray ramp (24) being configured to be mounted on or in a wiper blade (8, 9), the spray ramp (24) extending along the wiper blade (8, 9).

2. Cleaning system (12) according to claim 1, in which the duct (40, 41) through which the cleaning fluid is to flow has a cross-sectional restriction (50, 51) into which the channel (42, 43) through which air is to flow opens.

3. Cleaning system (12) according to any of the preceding claims, in which the duct (40, 41) through which the cleaning fluid is to flow extends perpendicularly to the channel (42, 43) through which air is to flow.

4. A cleaning system (12) according to any of the preceding claims, in which the channel (42, 43) through which air is to flow has a smaller cross-section at any point than a cross-section of the duct (40, 41) through which the cleaning fluid is to flow.

5. A cleaning system (12) according to any of the preceding claims, wherein the duct (40, 41) through which the cleaning fluid is to flow is formed in a one-piece body (96; 142, 144) of the mixing element (36; 56; 120, 122), and wherein the channel (42, 43) through which air is to flow is delimited by a portion of the one-piece body (96; 142, 144) extending into the duct (40, 41).

6. A cleaning system (12) according to claim 5, in which an external diameter of the portion of the body (96; 142, 144) delimiting the channel (42, 43) intended to be traversed by air is smaller than an internal diameter of the duct (40, 41) intended to be traversed by the cleaning fluid.

7. A cleaning system (12) according to any one of claims 5 or 6, in which the portion of the body (96; 142, 144) delimiting the channel (42, 43) intended to be traversed by air and the duct (40, 41) intended to be traversed by the cleaning fluid extend along the same direction.

8. Cleaning system (12) according to any one of the claims, in which the spray bar (24) comprises the duct (40, 41) through which the cleaning fluid is to flow, at least two foam outlets (44) each connected to the duct (40, 41) by a nozzle (36; 120, 122), and the channel (42, 43) through which air is to flow in each of the nozzles (36; 120, 122).

9. A wiper system (2) comprising at least one wiper device (6, 7) and a cleaning system (12) for a glass surface (4) of a vehicle (1) according to any of the preceding claims.

10. A wiper system (2) as claimed in claim 9, wherein the wiper device (6, 7) comprises a wiper blade (8, 9).

11. A wiper system (2) as claimed in claim 10, wherein the wiper device (6, 7) comprises a wiper arm (10, 11).
